(19) Europäisches Patentamt / European Patent Office / Office européen des brevets

(11) **EP 1 887 327 A1**

(12) **EUROPEAN PATENT APPLICATION**

(43) Date of publication:
**13.02.2008 Bulletin 2008/07**

(51) Int Cl.:
*G01F 1/66* (2006.01)

(21) Application number: **07110502.7**

(22) Date of filing: **19.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **10.08.2006 TR 200604281 U**

(71) Applicant: **Elektromed Elektronik Sanayi Ve Saglik Hizmetleri
Anonim Sirketi
06930 Ankara (TR)**

(72) Inventor: **Aydin, Taner
06930, Ankara (TR)**

(74) Representative: **Iskender, Ibrahim
Destek Patent Inc.
Patent Dep.
Tophane Ortapazar Cad. No. 7
Osmangazi
16040 Bursa (TR)**

(54) **Ultrasonic water meter**

(57) The invention relates to an ultrasonic water meter consisting of a water flow pipe (1), meter mechanical body (1.1) used to measure the flowing water amount based on water flow rate by use of sound signal transit duration changes between ultrasonic transducers (2.1, 2.2) located as connected to water flow pipe.

Fig. 2

EP 1 887 327 A1

## Description

## The Related Art

The invention relates to water meters metering the water consumption amount in houses and industry.
The invention particularly relates to ultrasonic water meter measuring the water consumption with ultrasonic method.

## Background of the Related Art

Today, ultrasonic method is a method used in industry to measure the flow amount and flow rates of fluids at a certain point.
Ultrasonic metering technique is particularly used in mainly chemistry, food and machine industries. Ultrasonic method is particularly used to measure the flow amount and flow rate of fluids in the processes where the more than one fluid components are received from the tank units where they are stored and combined at certain rates in mixing tanks in dyeing and medicine industries, which are sub-branches of chemistry industry.
Accordingly, ultrasonic metering method is used in food industry in similar way.
Another example where ultrasonic sound waves are used is submarines. Ultrasonic waves are used to measure the distance of submarines to water surface. Again, similarly, water depth and density parameters are measured by active use of ultrasonic sound waves in sea and ocean scientific studies.
Ultrasonic technologies have been used in metering the fluid flows in the industry for long times. However, there is no ultrasonic meter using this technology in metering potable water consumption, which has completed its field experimentation.
Again, the water meters used today are of small diameters (15 mm, 20 mm, 25 mm).
Today, in the patent no GB1167212 (Ultrasonic Flow Meter System), the system conducts process by use of Square Wave signal. This process does not provide full accuracy.
In the patent no. CN1648614 (Wedge and Wedge Unit for Use in Ultrasonic Doppler Flow Meter), and patent no TW223055B (Doppler type ultrasonic flowmeter, flow rate measuring method using Doppler type ultrasonic flow-meter and flow rate measuring program used in this Doppler type ultrasonic flow-meter), the system conducts metering by use of Doppler Effect principle. In addition, it is not likely to provide accurate and healthy metering since additional methods are not used.
Again, the patent no. WO2005064287 (Ultrasonic Flow Meter) contains solutions in regard to mechanical structure of the meter aiming to reduce the errors of ultrasonic Fluid meter.
Today, the rotation of turbine is prevented by the sedimentation of foreign objects on the turbine after a certain period of consumption in mechanical meters, and thus metering errors are encountered.
In conclusion, the existence of need for ultrasonic water meter not containing turbine thanks to Non-moving part metering technology and inadequacy of the existing solutions have necessitated to make improvement in the related art.

## Purpose of the Invention

From the background of the related art, from the Doppler Effect of ultrasonic waves, the purpose of the invention is to provide high metering accuracy thanks to metering by use of the method so called as non-moving part technology based on spreading speed of ultrasonic waves in the water.
Another purpose of the invention is to prevent occurrence of sedimentation, friction and eliminate turbine rotation problem as non-moving part metering technology does not contain turbine.
Another purpose of the invention is to provide long life of operation with the structure not containing turbine thanks to non-moving part metering technology.
Another advantage of the invention is that it does not need calibration thanks to its Non-moving Part measuring technology and not containing a turbine.
Another purpose of the invention is to provide low operating and maintenance cost thanks to its structure of not containing turbine because of non-moving part measuring technology.
Another purpose of the invention is to have communication protocol of Mbus (METER Bus) (IEC 61434-3) as per request of the Remote Meter Reading AMR (Automatic Meter Reading) and to allow reading the meter and consumption parameters remotely by use of such protocol.
The structural and characteristic features of the invention as well as all advantages will be better understood in the detailed description provided by use and reference to the figures given below, and for that reason the assessment should be made based on the said figures and detailed description.

## Description of the Figures

Figure 1 Ultrasonic water meter block circuit chart,

Figure 2 operating principle chart of Ultrasonic water meter,

Figure 3 external perspective view of Ultrasonic water meter.

## Reference Numbers

**[0022]**

1. Water Flow Pipe,

   1.1 Meter Mechanic Body,

2. Transducer,

   2.1 Transducer no 1,

   2.2 Transducer no 2,

3. Main processor,

4. Flow rate Measuring Integrity,

5. Real Time Clock,

6. Memory Unit,

7. Interface unit,

8. Power Supply Unit,

9. Liquid Crystal Display,

10. Direct Current (Dc-Dc) ) Transducer,

11. Regulator.

T1: Sound transmission from converter 1 to converter 2,

T2: Sound transmission rate from converter 2 to converter 1,

Vm: Water flow rate in environment,

C: Water sound speed in environment,

L: distance between two converter

A: Mechanic body cross-section area

K: Calibration coefficient

V: Flow volume

Q3 : Permanent Flow rate

Q1 : Minimum Flow rate

## Detailed Description of the Invention

The invention relates to an ultrasonic water meter having a structure of not containing turbine because of its non-moving part measuring technology, which consists of water flow pipe (1), transducer (2) , main processor (3), flow measuring integrity (4), real time (5), memory (6), interface (7), power supply unit (8), liquid crystal display (9), Direct current transducer (10), regulator (11).

Accuracy class of Ultrasonic meters Q3/Q1=160 (ISO 4064-1:2005).

Mechanic body design of the said ultrasonic water meter (U tube design) is realized in Diagonal type using Doppler method. The transducers (2.1, 2.2) are located diagonally in the body having diagonal type structure.

As a result of calculation from the Doppler Effect rule, flow volume from water flow pipe (meter) (1).

$$ V = A.k.\frac{L}{2}\left(\frac{1}{t_1} - \frac{1}{t_2}\right) $$

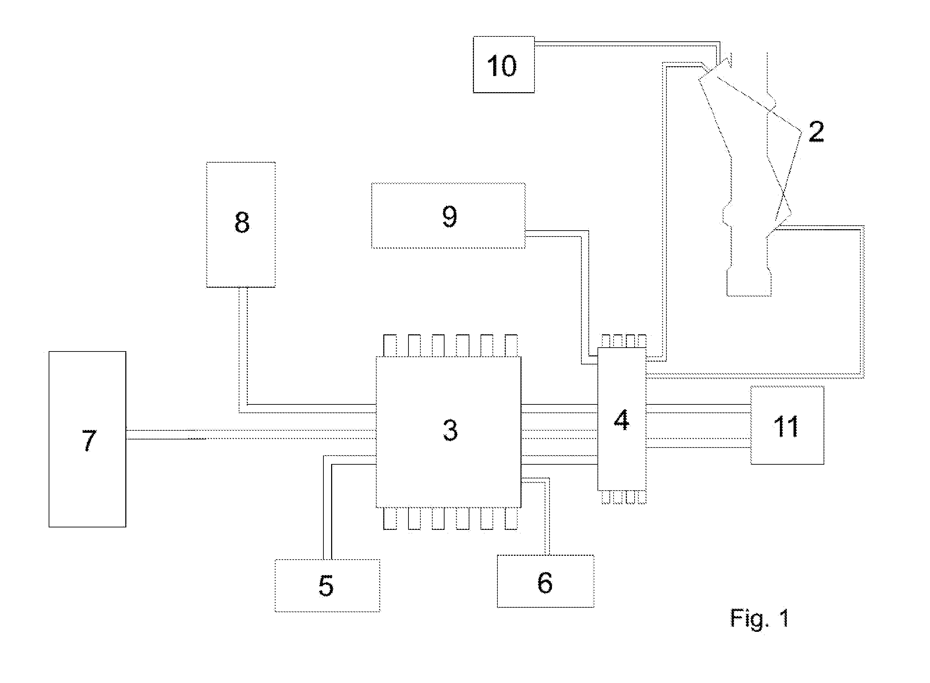

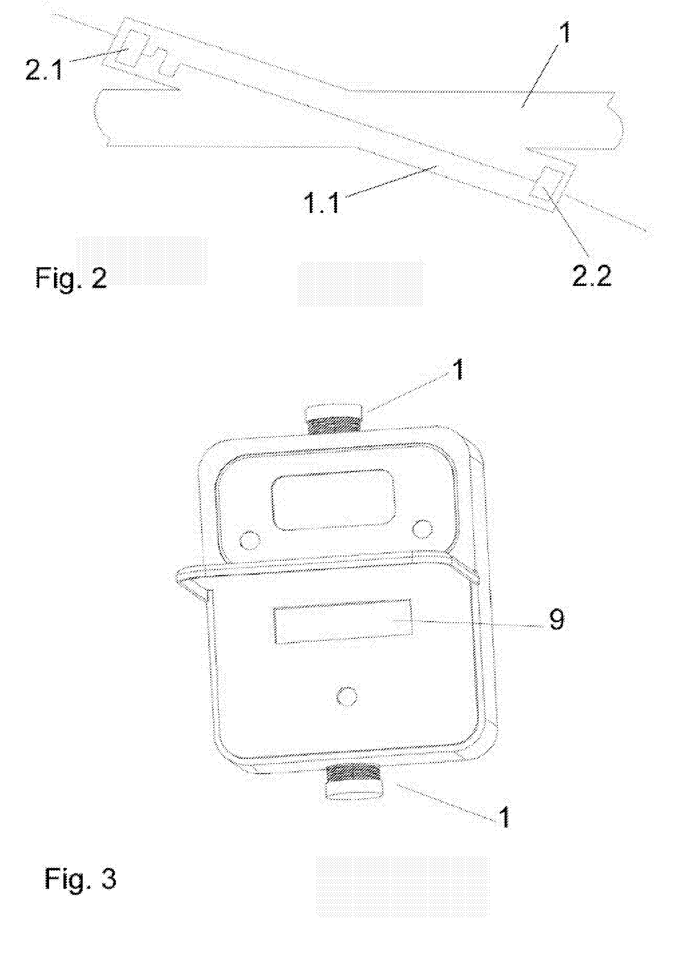

Figure 1 shows block circuit diagram of ultrasonic water meter. The transducers (2) are electronic components containing piezodisk plates transducing high frequency electric power into high frequency mechanic vibration and in contrary, high frequency mechanic vibration into high frequency electric power. There are 2 transducer (2) diagonally located in meter mechanic body (1.1) that is inside mechanic tube. The piezodisk plates containing the said transducers (2) are located in parallel to each other. (Figure 2).

The said ultrasonic water meter uses a method based on distance and sound speed measurement. This sing-around loop method is the method of measuring transit times of sound waves moving between both transducers (2.1, 2.2). This measuring is realized at very small time intervals.

The said ultrasonic water meter uses Transit Time Method. In this method, if the flow rate of the fluid increases, the differences between transit times increases, if the flow rate of the fluid decreases, the difference decreases. It is the method of using the sound speed transmission duration from transducer 1 (2.1) to transducer 2 (2.2) as main data. Flow metering is based on the basis that the transmission time of the sound strikes transmitted in flow direction is less than the duration of sound strikes transmitted in opposite direction. This is the fundamental of the transit time method. The transmission duration of sound strikes transmitted in flow direction is called the "transit time in flow direction", and transmission duration of sound strikes transmitted in opposite direction is called "transit time in opposite flow direction". The difference between the transit time in flow direction and transit time in opposite flow direction is an indication of the flow rate of the fluid.

In order to meter the flow rates accurately, zero calibration delay should be monitored dynamically.

In algorithm, the difference between t1 and t2 updated at the end of each measuring (the difference between t1 and t2 times is called "total transit time") is used. For standard deviation, 10 "total transit time" variables calculated consecutively are used.

As seen in figure 1, regulator (11) offers a voltage of 2,5 Volt used as reference in measuring.

As seen in Figure 2, a sound wave of 4 Mhz frequency is sent from transducer 1 (2.1) to transducer 2 (2.2) during water flow through pipe (1). The transducer 2 (2.2) detects this high frequency vibration and transduces high frequency into electrical signs.

The said transducers (2.1) and (2.2) operate with 2,5 Volt voltage. The said power supply unit (8) is a 3,6 Volt battery. The said 3,6 volt battery voltage is converted from direct current (DC-DC) into 5 volts by transducer (10). Thus, the voltage of 5 Volt voltage of the transducers (2.1) and (2.2) is provided.

The said high frequency electrical signs are sent to flow meter integrity. Flow metering integrity (4) processes the high frequency electrical power received from transducer 2 (2.2) and converts it into flow metering parameters. The said flow metering integrity (4) is a ASIC (Application-Specific Integrated Circuit). In other words, it is not a general purposed integrated circuit but specially designed for use in flow metering processes.

The said flow metering parameters and signs are interpreted by flow metering integrity (4) and required metering parameters are extracted from such signs. While the said flow meter integrity (4) realizes the said metering processes, it takes 2,5 volt level reference voltage as basis.

Water consumption data processed by the flow meter integrity (4) are transmitted to main processor (3). The said main processor (3) realizes all mathematical and program operations.

It is required to combine all operations at electronic devices. Real time (5) is used for such process.

The metering results obtained as a result of said all processes, instant and periodical consumption data are stored in a memory unit (6).

It contains an interface unit (7) providing connection of the water meter with external environment during the said processes and allowing data exchange with other units. The said interface unit (7) is in compliance with IEC 1107 standards and is an optical port unit. It accesses to the consumption data in water meter and other authorized data by means of optical probe with help of a manual terminal.

As seen in Figure 1, it contains a power source unit (8) to supply the power need of the meter. The said ultrasonic meter contains 3,6 Volt Lithium battery as power source (8).

In a preferred embodiment of the invention, instead of connection of each meter to a central computer separately for remote reading of meter and consumption data of the said ultrasonic water meter. Metering and consumption of the meters close to each other physically are collected in a meter and transmitted to central computer, which is a better advantage in terms of use and saving. The meter in this embodiment is master meter, and the meters connected to master meter are slave meters.

In a preferred embodiment of the invention, for MBUS communication, Vcc is used as power supply (8). The embodiment receives the needed power from data line and thus the system has a low power consumption structure.

In a preferred embodiment of the invention, it is also possible to access the metering and consumption data by means of optical port also available on front surface of meter. Optical port communication is conducted at IEC 62056-21 (former IEC 1107) international standards. The data from optical port can be read by means of a manual terminal or portable computer connected optical probe.

A preferred embodiment of the invention consists of Mirror type structure, which is another method in mechanical body design. In mirror type, transducers (2.1, 2.2) are located on the same axis. The signals transmitted from transducer (2.1) via 2 mirrors located in U tube body are reflected onto mirrors and transmitted to transducer 2 (2.2). The distance taken by the signal of the same type between two probes is increased when compared to diagonal type.

The protection scope of this patent application has been specified under the claims and can never be limited to the descriptions provided for sampling. It is obvious that any person skilled in the related art may suggest the innovation claimed under this invention by use of similar embodiments and/or may apply this embodiment to other arts used for similar purposes in the related art. Therefore, it is obvious that such embodiments will lack innovation and particularly exceeding the background of the related art.

**Claims**

1. An ultrasonic water meter consisting of water flow pipe (1), meter mechanical body (1.1) and designed for metering water consumption amount passing through the said water flow pipe (1) and it is **characterized in that** it comprises transducers (ultrasonic transducers) (2.1, 2.2) located as connected with the said water flow pipe (1) and providing measurement of the consumption data by applying the sing-around loop and analogue triggering method.

2. An ultrasonic water meter according to claim 1 wherein it comprises transducers (2.1, 2.2) located on the meter mechanical body (1.1) diagonally.

3. An ultrasonic water meter according to claim 1 wherein it comprises a regulator (11) offering a voltage of 2,5 Volt preferably used as reference in measuring.

4. An ultrasonic water meter according to claim 1 wherein it comprises battery as power supply (8)

**5.** An ultrasonic water meter according to claim 1 wherein it comprises direct current (DC-DC) transducer (10) transducing the voltage of the battery used as power supply (8) into voltage needed by the said transducers (2.1) and (2.2).

**6.** An ultrasonic water meter according to claim 1 wherein it comprises a flow measuring integrity (4) processing the high frequency electric power received from transducer no 2 (2.2) and transducing it into flow metering parameters.

**7.** An ultrasonic water meter according to claim 1 and claim 2 wherein said flow meter integrity (4) is specially designed ASIC (Application-Specific Integrated Circuit) used in flow metering processes.

**8.** An ultrasonic water meter according to claim 1 wherein it comprises a main processor (3) realizing all water consumption data processed by the flow metering circuit (4) and all mathematical and program operations.

**9.** An ultrasonic water meter according to claim 1 wherein it comprises a real time (5) associating all conducted processes with time data.

**10.** An ultrasonic water meter according to claim 1 wherein it comprises a memory unit (6) where obtained metering results and instant and periodical consumption data are stored.

**11.** An ultrasonic water meter according to claim 1 wherein it comprises an interface unit (7) providing connection of the said ultrasonic water meter with external environment and realizing data exchange with other units.

**12.** An ultrasonic water meter according to claim 1 wherein it comprises battery used as power supply (8) of the said ultrasonic water meter.

Fig. 1

EP 1 887 327 A1

Fig. 2

Fig. 3

**European Patent Office**

**EUROPEAN SEARCH REPORT**

Application Number

EP 07 11 0502

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 713 080 A (DELSING JERKER [SE] FLOW GROUP AB D [SE]) 22 May 1996 (1996-05-22) * abstract; figure 1 * * column 1, line 11 - column 2, line 27 * ----- | 1-12 | INV. G01F1/66 |
| X | US 3 653 259 A (MCSHANE JAMES L) 4 April 1972 (1972-04-04) * abstract; figure 3 * ----- | 1-12 | |
| X | EP 0 272 942 A (BROOKES & GATEHOUSE [GB]) 29 June 1988 (1988-06-29) * column 3, line 20 - column 6, line 53 * ----- | 1-12 | |
| X | US 3 282 101 A (MIAKI YAMAMOTO) 1 November 1966 (1966-11-01) * column 2, line 13 - line 26; figure 1 * ----- | 1-12 | |
| A | US 5 329 821 A (BIRNBAUM THEODORE N [US] ET AL) 19 July 1994 (1994-07-19) * abstract; figures 1,2 * * column 3, line 53 - column 8, line 56 * ----- | 1-12 | |
| A | US 5 831 175 A (FLETCHER-HAYNES PETER [US]) 3 November 1998 (1998-11-03) * abstract; figures 1,9,10 * * column 13, line 62 - column 14, line 8 * ----- | 1-12 | TECHNICAL FIELDS SEARCHED (IPC) G01F |
| A | EP 1 111 349 A (COMMW SCIENT IND RES ORG [AU]; AGL CONSULTANCY PTY LTD [AU]) 27 June 2001 (2001-06-27) * the whole document * ----- | 1-12 | |
| A | WO 93/00569 A (COMMW SCIENT IND RES ORG [AU]; AGL CONSULTANCY PTY LTD [AU]) 7 January 1993 (1993-01-07) * abstract; figure 1 * ----- | 1-12 | |

The present search report has been drawn up for all claims

| Place of search | Date of completion of the search | Examiner |
|---|---|---|
| The Hague | 3 December 2007 | Yildiz, Dilek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 11 0502

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2007

| Patent document cited in search report | | Publication date | Patent family member(s) | | Publication date |
|---|---|---|---|---|---|
| EP 0713080 | A | 22-05-1996 | DE | 69529391 D1 | 20-02-2003 |
| | | | DE | 69529391 T2 | 30-10-2003 |
| | | | DK | 713080 T3 | 05-05-2003 |
| | | | SE | 503614 C2 | 15-07-1996 |
| | | | SE | 9403632 A | 25-04-1996 |
| | | | US | 5796009 A | 18-08-1998 |
| US 3653259 | A | 04-04-1972 | BE | 763916 A1 | 08-09-1971 |
| | | | DE | 2110582 A1 | 16-09-1971 |
| | | | ES | 388842 A1 | 01-06-1973 |
| | | | FR | 2081750 A5 | 10-12-1971 |
| | | | GB | 1344106 A | 16-01-1974 |
| | | | SE | 381098 B | 24-11-1975 |
| EP 0272942 | A | 29-06-1988 | DE | 3782018 D1 | 05-11-1992 |
| | | | DE | 3782018 T2 | 18-02-1993 |
| | | | GB | 2200753 A | 10-08-1988 |
| US 3282101 | A | 01-11-1966 | DE | 1523260 A1 | 22-05-1969 |
| | | | GB | 1047532 A | 09-11-1966 |
| US 5329821 | A | 19-07-1994 | NONE | | |
| US 5831175 | A | 03-11-1998 | NONE | | |
| EP 1111349 | A | 27-06-2001 | US | 2002011119 A1 | 31-01-2002 |
| WO 9300569 | A | 07-01-1993 | AT | 163756 T | 15-03-1998 |
| | | | CA | 2112094 A1 | 07-01-1993 |
| | | | CN | 1070473 A | 31-03-1993 |
| | | | DE | 69224643 D1 | 09-04-1998 |
| | | | DK | 591349 T3 | 28-09-1998 |
| | | | EP | 0591349 A1 | 13-04-1994 |
| | | | ES | 2112907 T3 | 16-04-1998 |
| | | | FI | 935822 A | 21-02-1994 |
| | | | GR | 3026606 T3 | 31-07-1998 |
| | | | HU | 68387 A2 | 28-06-1995 |
| | | | IE | 922038 A1 | 30-12-1992 |
| | | | IN | 178275 A1 | 22-03-1997 |
| | | | JP | 7500662 T | 19-01-1995 |
| | | | NZ | 243293 A | 28-03-1995 |
| | | | PL | 169741 B1 | 30-08-1996 |
| | | | SG | 45209 A1 | 16-01-1998 |
| | | | US | 5553505 A | 10-09-1996 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1167212 A
- CN 1648614
- TW 223055 B
- WO 2005064287 A